(19) Europäisches Patentamt
European Patent Office
Office européen des brevets

(11) Publication number: **0 363 182 B1**

(12) # EUROPEAN PATENT SPECIFICATION

(45) Date of publication of patent specification: **27.12.95**

(51) Int. Cl.$^{6}$: **G01N 27/411**

(21) Application number: **89310166.7**

(22) Date of filing: **04.10.89**

The file contains technical information submitted after the application was filed and not included in this specification

(54) **Electrolytic sensors**

(30) Priority: **06.10.88 GB 8823507**

(43) Date of publication of application:
**11.04.90 Bulletin 90/15**

(45) Publication of the grant of the patent:
**27.12.95 Bulletin 95/52**

(84) Designated Contracting States:
**AT BE CH DE ES FR GB GR IT LI LU NL SE**

(56) References cited:
**EP-A- 0 208 072**
**GB-A- 1 470 558**
**US-A- 4 645 571**

(73) Proprietor: **MINERAL INDUSTRY RESEARCH ORGANISATION**
**6 St. James's Square**
**London SW1 (GB)**

(72) Inventor: **Fray, Derek John**
**157 Shelford Road**
**Cambridge CB2 2ND (GB)**
Inventor: **Kumar, Vasant Ramachandran**
**42 Cambanks**
**Union Lane**
**Cambridge CB4 1PZ (GB)**

(74) Representative: **Whalley, Kevin et al**
**MARKS & CLERK,**
**57-60 Lincoln's Inn Fields**
**London WC2A 3LS (GB)**

**EP 0 363 182 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to electrolytic sensors which are useful for the detection and measurement of concentrations of minor elements, especially non-metallic and semi-metallic elements, in molten metallurgical phases, e.g. metals, alloys, slags, mattes and drosses.

There is a need, especially in metal refining and alloying processes, for a sensor which can be used to monitor the concentrations of minor elements in the melts as the process proceeds, so that the process can be controlled.

EP-A-0208072 describes an apparatus for electro-chemical determination of silicon dissolved in molten metal including a layer of solid electrolyte for conducting oxygen ions, a reference electrode contacting one surface of the layer of electrolyte, means for determining a potential difference between the reference electrode and molten metal, and a solid auxiliary electrode comprised of $SiO_2$. In this device the sensor utilizes an electrolyte which conducts oxygen ions.

GB-A-1470558 describes an apparatus for detecting an element in a substance by monitoring the EMF generated between the substance and reference material wherein the reference material is a solid electrolyte comprising a beta-alumina containing the element, or a solid compound of the element separated from the substance by the electrolyte, one electrode for contacting the substance and a second electrode separated from the first electrode by a solid electrolyte.

The above-mentioned GB-A-1470558 and also GB-A-1602564 describe and claim electrolytic sensors wherein a solid electrolyte, based on a $\beta$-alumina matrix, is interposed between the melt being tested and the elements to be detected or measured. However, the ionic species which can be measured by this prior method are limited to ions which are mobile in the solid electrolyte, i.e. monovalent and some divalent and trivalent ions such as alkali metal/alkaline earth metal ions.

There is a problem where detection or measurement of multi-valent elements such as P, As, Sb, or S in metallurgical phases is required, as it may be in many refining or alloying processes.

The present invention therefore seeks to meet this requirement and provide a sensor which overcomes the disadvantages of the prior art.

The present invention in one aspect provides an electrolytic sensor for the detection and measurement of a polyvalent minor element in a molten metallurgical phase, wherein the minor element is selected from phosphorus, arsenic, antimony and sulphur, comprising: two electrodes separated by a solid electrolyte matrix, on which solid electrolyte matrix is deposited a compound of (i) the said element to be detected and measured, (ii) oxygen, and (iii) an element selected from alkali and alkaline earth metal elements whose ions are mobile in the solid electrolyte matrix; and means for measuring the EMF between the said electrical leads.

Preferably the solid electrolyte is based on $\beta$-alumina or $\alpha + \beta$ alumina.

The element to be detected will be phosphorus, arsenic, antimony or sulphur; while the mobile element will be an alkali or alkaline-earth element ion such as Na, Li, K or Ca.

It may also be necessary to deposit with the deposition phase a conducting phase, e.g. a metal, oxide or carbide, which is electrically conducting. Metals in particular may be used as conducting phases and precious metals may be especially useful.

The solid electrolyte is suitably used either in the form of a closed-end tube or is sealed into a silica tube. A reference material (which is usually a mixture of ferric oxide and a metal ferrite) is placed in the tube and the deposition and conducting phases are coated on the external surface of the solid electrolyte.

Thus, in a typical example, the conducting and deposition phases may be platinum/sodium phosphate which may be vapour-deposited on a solid electrolyte matrix which contains sodium ions. In such an example, the platinum acts as an electrical conductor between the solid electrolyte ($\beta$-alumina) and the molten metal. On the surface of the electrolyte the following equilibrium is set up between dissolved Na, P and O in the molten metal or alloy and the solid $Na_3PO_4$.

$$3Na^+ + P + 4O \rightleftharpoons Na_3PO_4\ (s)$$

(in molten metal)

If the oxygen content of the melt remains constant (as it usually does by virtue of the metal/metal oxide equilibrium) any change in phosphorus content results in a change in the sodium activity in the solid $Na_3PO_4$ and this is detected by the $\beta$-alumina sensor. In this way phosphorus can be detected in melts

based on aluminium, tin or copper. A similar approach can be used to detect other polyvalent elements in metals or alloys, e.g. $NaAsO_2$ or $NaSbO_2$ may be deposited on the β-alumina matrix if detection of As or Sb respectively is required. For determination of sulphur, it is necessary to use a relatively high-melting salt such as $CaSO_4$ in contact with Ca/β-alumina matrix. Normally such a salt will be oxidic in character.

By "oxidic" as used herein, there is meant a compound in which the elements are chemically combined with oxygen.

The sensor according to the invention may be used for on-line detection of minor elements, to monitor the progress of refining or alloying operations carried out on alloy or metal melts.

The invention in another aspect provides a method of measuring the concentration of a polyvalent minor element in a molten metallurgical phase, wherein the minor element is selected from phosphorus, arsenic, antimony and sulphur, characterized in that a sensor in accordance with the first aspect of the invention is immersed in the said molten phase and the EMF (electro-motive force) of the resulting cell is measured.

Preferably the measured EMF is used as a measure of the concentration of the minor element in the molten phase at constant oxygen concentration.

The invention will be further illustrated by the following Examples, in which Example 1 relates to the detection and measurement of phosphorus in molten tin, Example 2 to the detection and measurement of phosphorus in aluminium/silicon alloys, Example 3 to the measurement of oxygen and sulphur in molten copper, and Example 4 to the measurement of oxygen and sulphur in lead.

Reference will also be made to the accompanying drawings, wherein figures 1 to 5 are graphs of EMF plotted against concentration of the element being detected (temperature in figures 4 and 5) in the various Examples, as will be described in more detail subsequently.

An electrolytic sensor for phosphorus detection was prepared as follows:

An isopressed pellet of $Na_3PO_4$ + Pt was heated by a W-coil to a temperature T of at least 1600 °C within an evacuated chamber and the vapour was allowed to deposit on the outer surface of a β-alumina tube. A reference material (ferric oxide + metal ferrite) was enclosed within the tube. Electrical connections were made via iron wires inserted into the reference material and into the melt to be tested, these being connected via a voltmeter.

EXAMPLE 1 Measurement of phosphorus in molten tin

A phosphorus sensor prepared as described above was immersed in molten tin at 600 °C. The EMF obtained with pure (99.999%) tin prior to P additions was 0.62V approximately. This initial attainment of equilibration takes about 20-30 mins. Successive addition of phosphorus in the form of red P led to continuous decrease in the EMF values and an apparent saturation at -0.05V approximately. When oxygen measurements were carried out in conjunction, the EMF's appeared to be independent of P addition, and attained a steady EMF in 60-90 minutes. Experiments at 700 °C improved the response time of both the P and O sensors by 10 and 15 mins. respectively.

The oxygen saturation was observed at 0.968V, while the P saturation occurred at 0.152V.

EXAMPLE 2 Measurement of phosphorus in molten aluminium/silicon alloy

Using a phosphorus sensor prepared as described above, tests were carried out on a molten Al/Si alloy containing known amounts of phosphorus. The reaction at the working surface can be represented as:

$$3Na_3PO_4(s) + 8Al(\ell) \rightleftharpoons 9Na + 3P + 4Al_2O_3$$

for the electrolytic cell represented as:

(-)Steel/Liquid alloy/$Na_3PO_4$+Pt/Naβ-alumina/REF/Steel(+)

The relationship between the EMF of this cell and the phosphorus content of the melt can be expressed as:

$$\log [ppmP] = A + B [EMF]$$

where A and B are constants.

A plot of EMF vs. log [ppmP] is shown in Figure 1. Further phosphorus additions were made to the melt, in the form of $P_2O_5$. Once the EMF reached the value of -0.260 V (±0.015) further additions of $P_2O_5$ gave no change in the EMF value. This is consistent with the attainment of P saturation of the melt and the onset of AℓP precipitation, as is predicted by the Aℓ-P phase-diagram.

EXAMPLE 3 Measurement of oxygen and sulphur in molten copper

(a) Oxygen measurement

Molten copper at 1100°C was saturated with oxygen using $Cu_2O$ and oxygen gas. The following cells were set up to measure the oxygen content of the melt:

(-) Fe, FeO / Ca- β-alumina / Cu(1) (+) (CELL A)
(O. sat.)

(-) Fe, FeO / Na- β-alumina / Cu(1) (+) (CELL B)
(O. sat.)

The average EMF readings from these two cells were

| | |
|---|---|
| CELL A | 0.541 V (±0.015V) |
| CELL B | 0.550 V (±0.02V) |

(b) Sulphur measurement

Sulphur additions were made to the molten copper at 1100°C, using $Cu_2S$ in copper foil. The following cell was set up:

(-) Cu(1) / $CaSO_4$ / Ca-β-alumina / Fe, FeO (+)
(O. sat) + Cr
(with S
additions)

The following EMF values were measured for different sulphur concentrations at constant (saturated) oxygen concentration:

| Wt % S | EMF (mV) |
|---|---|
| 0.0012 | 64 |
| 0.0032 | 12 |
| 0.0066 | -23 |
| 0.0158 | -80 |
| 0.0407 | -149 |
| 0.0631 | -287 |
| 0.1122 | -268 |
| 0.3020 | -272 |
| 0.6050 | -320 |

A plot of EMF (mV) vs. log (ppmS) in melt is shown in figure 2.

In a second experiment copper at 1100 °C containing 400ppm oxygen was measured using cells A + B (see above).

The following EMF measurements were obtained:

| | |
|---|---|
| CELL A | 0.398 v (±0.025) |
| CELL B | 0.411 v (±0.025) |

With added sulphur at the concentrations specified the following EMF values were obtained at constant oxygen concentration:

| Wt % S | Average EMF (V) ±15 mV) |
|---|---|
| 0.0017 | NO STABLE EMF |
| 0.0199 | 0.464 V. |
| 0.0631 | 0.420 V. |
| 0.1096 | 0.349 V. |
| 0.1995 | 0.322 V. |
| 0.5543 | 0.242 V. |
| 0.6218 | 0.208 V. |

Further sulphur additions had no added effect.

A plot of EMF (mV) vs. log (ppmS) in melt is shown in Figure 3.

EXAMPLE 4 Measurement of oxygen and sulphur in molten lead

The following cells were set up:

(-)Pb(1) / $CaSO_4$ / Ca-β-alumina / Fe,FeO (+)
(Saturated with O+S) (CELL A)

(+)Pb(1) / Ca-β-alumina / Fe,FeO (-)
(O saturated) (CELL B)

The following measurements were made:

The CELL B EMF being a measure of oxygen concentration and CELL A EMF being a measure of

sulphur concentration.

| T °C | T °K | EMF CELL A (mV) | EMF CELL B (mV) |
|---|---|---|---|
| 590 | 863 | 39 | 405 |
| 615 | 888 | 19 | 412 |
| 655 | 928 | -17 | 417 |
| 701 | 974 | -47 | 427 |
| 749 | 1022 | -86 | 437 |
| 810 | 1083 | -133 | 450 |
| 907 | 1180 | -211 | 467 |
| CELL A EMF = 713.5 - 0.78 T (K) (mV) | | | |
| CELL B EMF = 236.5 + 0.196 T (K) (mV) | | | |

The plots of EMF (mV) vs TEMP (°C) for CELLS A and B are shown in Figures 4 and 5.

**Claims**

1. An electrolytic sensor for the detection and measurement of a polyvalent minor element in a molten metallurgical phase, wherein the minor element is selected from phosphorus, arsenic, antimony and sulphur, comprising: two electrodes separated by a solid electrolyte matrix, on which solid electrolyte matrix is deposited a compound of (i) the said element to be detected and measured, (ii) oxygen, and (iii) an element selected from alkali and alkaline earth metal elements whose ions are mobile in the solid electrolyte matrix; and means for measuring the EMF between the said electrical leads.

2. A sensor as claimed in claim 1, characterized in that the solid electrolyte is based on $\beta$-alumina or $\alpha$ + $\beta$-alumina.

3. A sensor as claimed in claim 1 or 2, characterized in that a metallic electrical conductor has been deposited with the said compound, on the solid electrolyte matrix prior to disposing the solid electrolyte matrix in the said molten metal.

4. A sensor as claimed in claim 3, characterized in that the metallic conductor is a precious metal.

5. A method of measuring the concentration of a polyvalent minor element in a molten metallurgical phase, wherein the minor element is selected from phosphorus, arsenic, antimony and sulphur, characterized in that a sensor as claimed in any of claims 1 to 4 is immersed in the said molten phase and the EMF of the resulting cell is measured.

6. A method as claimed in claim 5, characterized in that the measured EMF is used as a measure of the concentration of the minor element in the molten phase at constant oxygen concentration.

**Patentansprüche**

1. Elektrolytischer Sensor zum Detektieren und Messen von eines mehrwertigen Spurenelementes in einer metallurgischen schmelzflüssigen Phase, bei welchem das Spurenelement ausgewählt wird aus Phosphor. Arsen, Antimon und Schwefel, umfassend zwei durch eine feste Matrix getrennte Elektroden, wobei auf der festen Elektrolytmatrix abgeschieden sind: eine Verbindung (i) des zu detektierenden und zu messenden Elements; (ii) Sauerstoff; sowie (iii) ein aus den Alkali- und Erdalkalielementen aus gewähltes Element, deren Ionen in der festen Elektrolytmatrix mobil sind; und umfassend Mittel zum Messen der EMK zwischen den elektrischen Leitungen.

2. Sensor nach Anspruch 1, dadurch gekennzeichnet, daß der feste Elektrolyt auf beta-Aluminiumoxid oder alpha-beta-Aluminiumoxid beruht.

3. Sensor nach Anspruch 1 oder 2, dadurch gekennzeichnet, daß mit der Verbindung ein metallischer elektrischer Leiter auf der festen Elektrolytmatrix abgeschieden wird, bevor die feste Elektrolytmatrix in

das geschmolzene Metall gebracht wird.

4. Sensor nach Anspruch 3, dadurch gekennzeichnet, daß der metallische Leiter ein Edelmetall ist.

5. Verfahren zum Messen der Konzentration eines mehrwertigen Spurenelementes in einer metallurgischen schmelzflüssigen Phase, bei welchem das Spurenelement ausgewählt wird aus Phosphor, Arsen, Antimon und Schwefel, dadurch gekennzeichnet, daß ein Sensor nach Anspruch 1 bis 4 in die schmelzflüssige Phase eingetaucht wird und die EMK der resultierenden Zelle gemessen wird.

6. Verfahren nach Anspruch 5, dadurch gekennzeichnet, daß die gemessene EMK als ein Maß für die Konzentration des Spurenelementes in der schmelzflüssige Phase bei konstanter Sauerstoffkonzentration verwendet wird.

**Revendications**

1. Capteur électrolytique pour détecter et mesurer un élément mineur polyvalent dans une phase métallurgique fondue, dans laquelle l'élément mineur est choisi parmi le phosphore, l'arsenic, l'antimoine et le soufre. comprenant: deux électrodes séparées par une matrice électrolyte solide, sur laquelle matrice électrolyte solide est déposée un composé de (i) ledit élément devant être détecté et mesuré, (ii) l'oxygène, et (iii) un élément choisi parmi les éléments métalliques alcalins et alcalino-terreux dont les ions sont mobiles dans la matrice électrolyte solide; et des moyens pour mesurer la force électromotrice (EMF) entre lesdits conducteurs électriques.

2. Capteur selon la revendication 1, caractérisé en ce que l'électrolyte solide est basé sur la $\beta$-alumine ou l'$\alpha + \beta$-alumine.

3. Capteur selon la revendication 1 ou 2, caractérisé en ce qu'un conducteur électrique métallique a été déposé avec ledit composé, sur la matrice électrolyte solide avant d'agencer la matrice électrolyte dans ledit métal fondu.

4. Capteur selon la revendication 3, caractérisé en ce que le conducteur métallique est un métal précieux.

5. Procédé de mesure de la concentration d'un élément mineur polyvalent dans une phase métallurgique fondue, dans laquelle l'élément mineur est choisi parmi le phosphore, l'arsenic, l'antimoine et le soufre, caractérisé en ce que un capteur selon l'une quelconque des revendications 1 à 4 est immergé dans ladite phase fondue et l'EMF de la cellule résultante est mesurée.

6. Procédé selon la revendication 5, caractérisé en ce que l'EMF mesurée est utilisé comme mesure de la concentration de l'élément mineur dans la phase fondue à concentration constante d'oxygène.

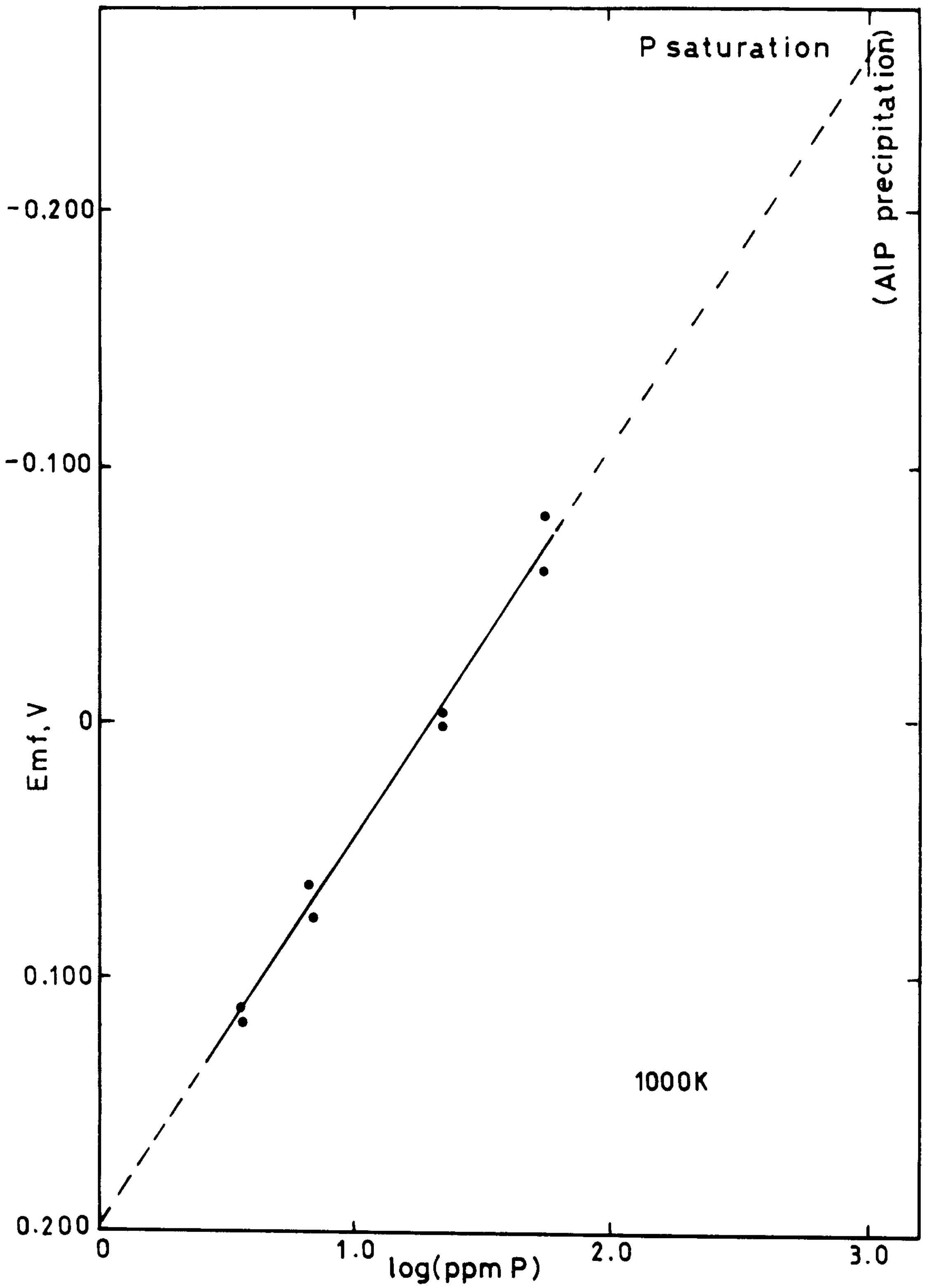


FIG. 1. Emf versus logarithm of ppm phosphorus

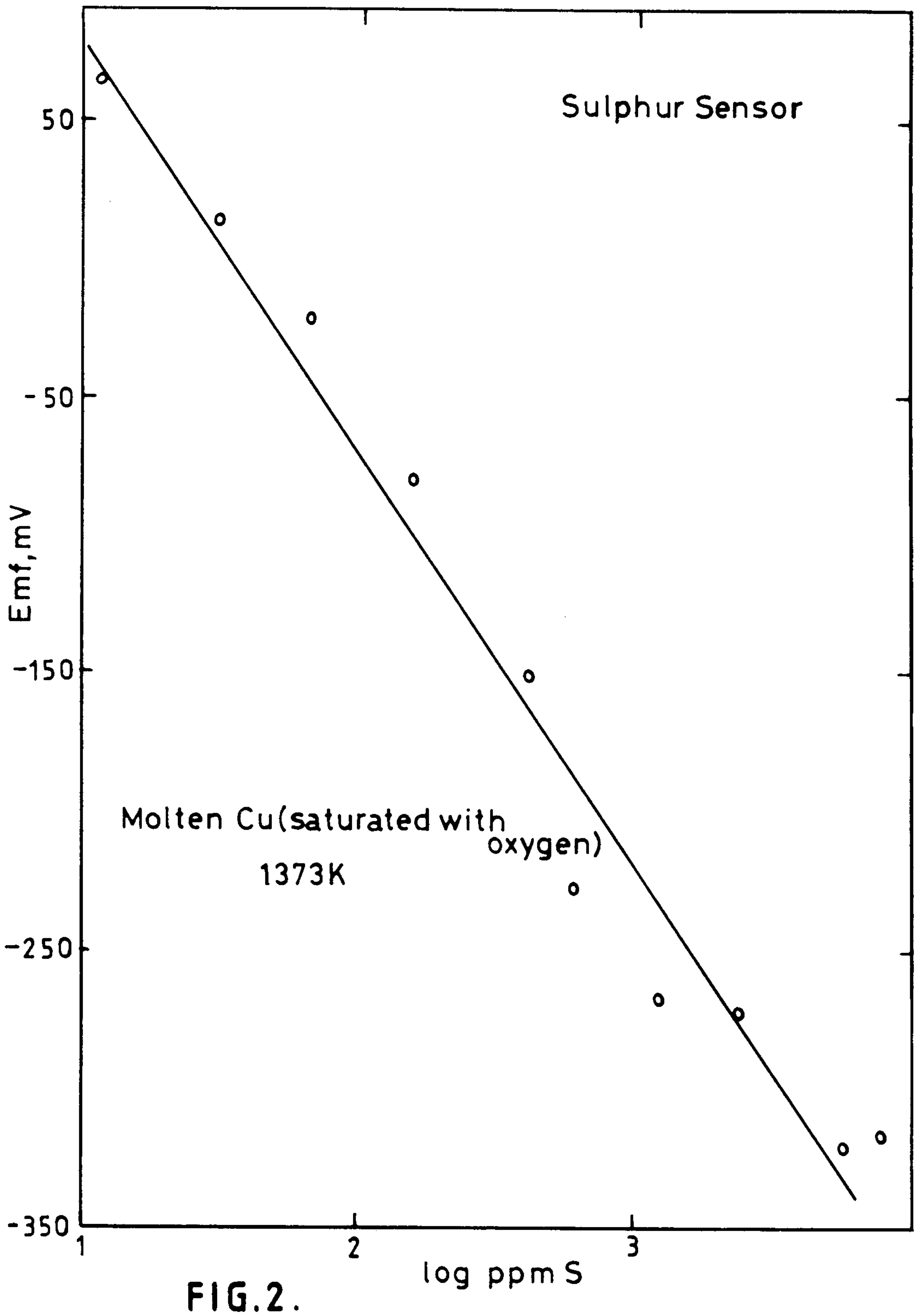
Sulphur Sensor
Molten Cu(saturated with oxygen)
1373K
Emf, mV
50
-50
-150
-250
-350
1
2
3
log ppm S

FIG.2.

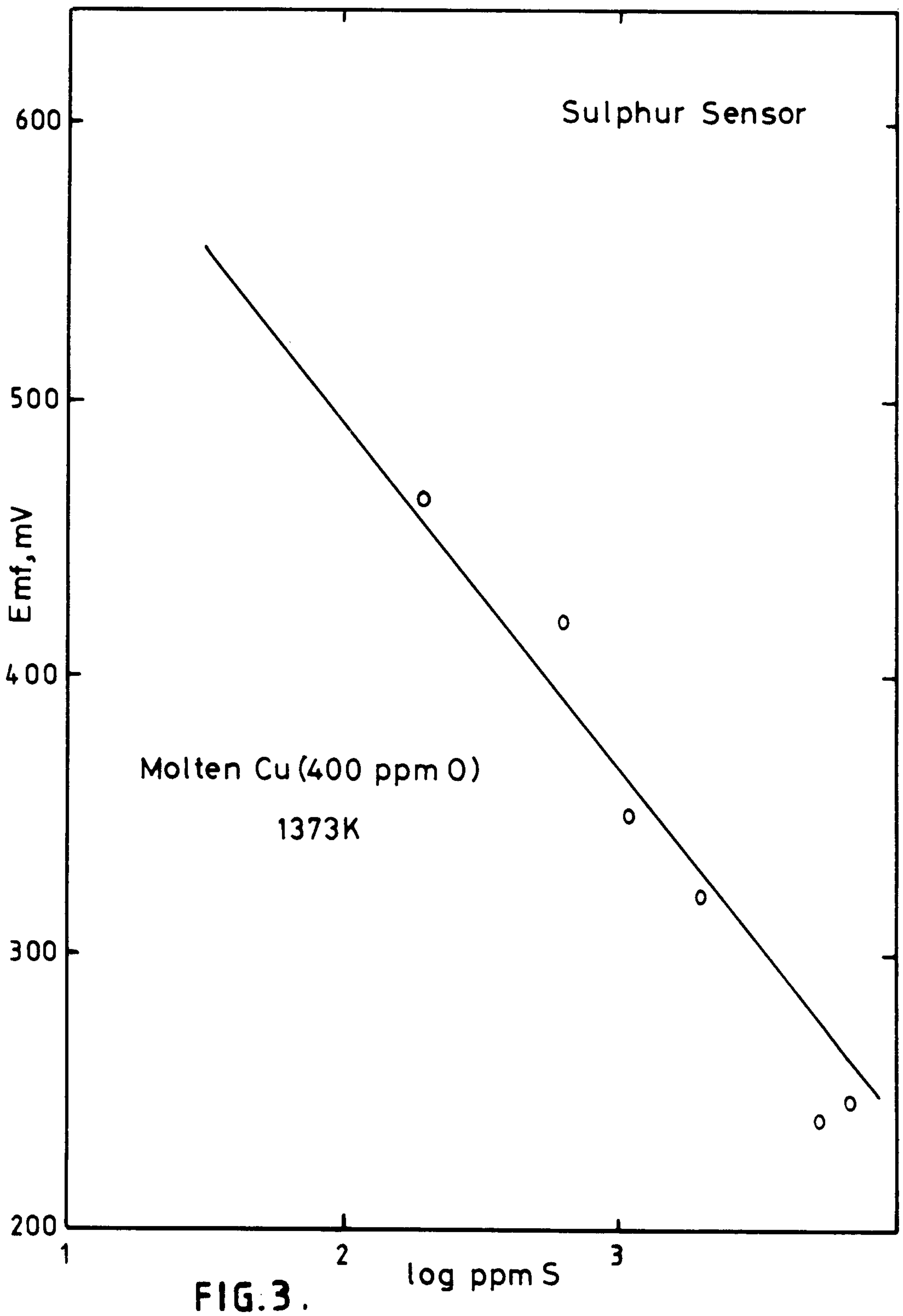
Sulphur Sensor
600
500
400
300
200
Emf, mV
Molten Cu (400 ppm O)
1373K
1
2
3
log ppm S

FIG.3.

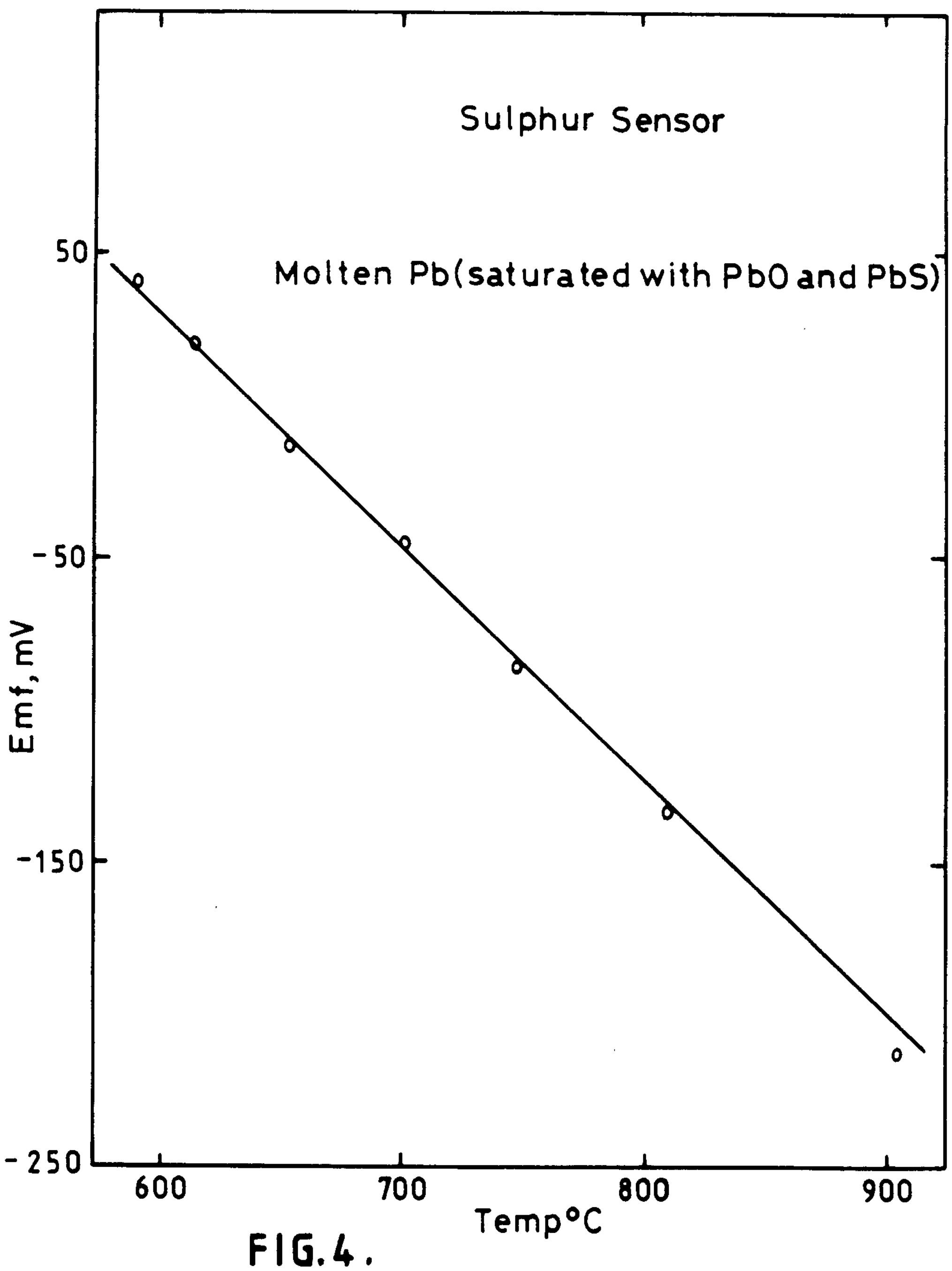
Sulphur Sensor
Molten Pb(saturated with PbO and PbS)
50
-50
-150
-250
Emf, mV
600
700
800
900
Temp°C

FIG.4.

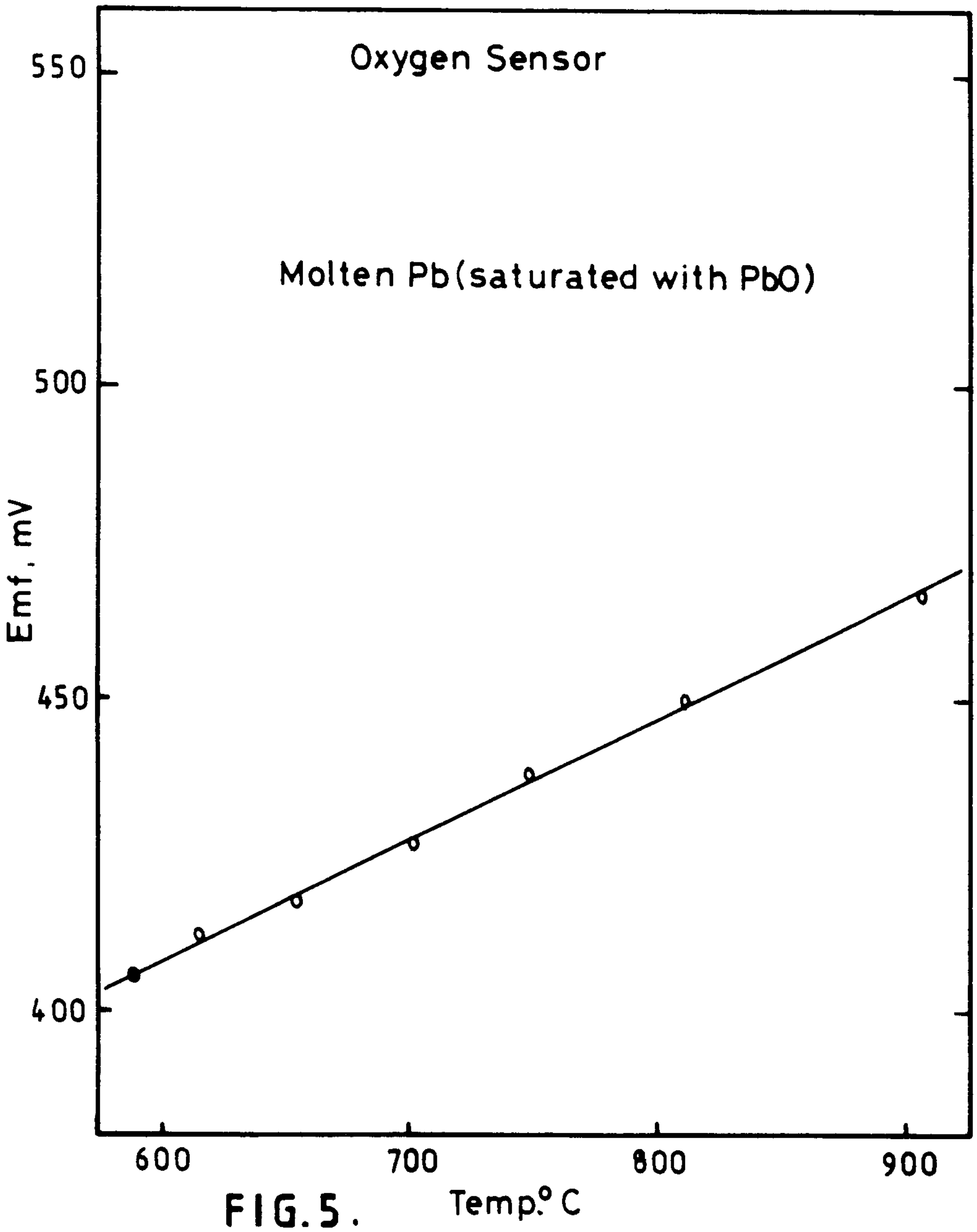
Oxygen Sensor
Molten Pb(saturated with PbO)
550
500
450
400
Emf, mV
600
700
800
900
Temp.° C

FIG.5.